# EUROPÄISCHE PATENTSCHRIFT

(11) **EP 2 293 374 B1**
(45) Veröffentlichungstag und Bekanntmachung des Hinweises auf die Patenterteilung: **10.02.2016**
(21) Anmeldenummer: 10007985.4
(22) Anmeldetag: 16.09.2004
(51) Int. Cl.: H01M 10/10, H01M 2/36, H01M 4/22, H01M 10/12

(54) **Verfahren und Vorrichtung zur Herstellung einer wartungsfreien Batterie mit festgelegtem Elektrolyten**
Method and device for manufacturing a maintenance-free lead battery with an immobilized electrolyte
Procédé et dispositif pour l'élaboration d'une batterie sans entretien contenant un électrolyte immobilisé

(43) Veröffentlichungstag der Anmeldung: 09.03.2011
(62) Teilanmeldung aus: 04021984.2
(73) Patentinhaber: HOPPECKE Batterien GmbH & Co. KG, 59929 Brilon (DE)
(72) Erfinder: Ruch, Jean, D-59929 Brilon, (DE); Schröder, Dirk, D-59872 Meschede, (DE); Schulte, Albert, D-59929 Brilon, (DE)
(74) Vertreter: Stenger Watzke Ring

(56) Entgegenhaltungen:
- EP-A- 0 491 150
- EP-A- 1 317 006
- US-A- 4 359 075

## Beschreibung

Die vorliegende Erfindung betrifft ein Verfahren sowie eine Vorrichtung zur Herstellung eines Akkumulators mit einem festgelegten Elektrolyten.

Akkumulatoren mit festgelegten Elektrolyten sind seit den 1950-Jahren bekannt. Der Vorteil solcher Batterietypen liegt in ihrer Wartungsfreundlichkeit und Sicherheit gegenüber dem Auslaufen des in den Akkumulatorzellen befindlichen Elektrolyten. Zur Festlegung des Elektrolyten ist es bekannt, diesen in Form eines Gels zu binden oder mit Hilfe eines mikrostrukturierten Vlieses in den Akkumulatorzellen zu fixieren.

Ein aus dem Stand der Technik bekannter Vertreter der gelfixierten Akkumulatoren sind Blei-Gel-Akkumulatoren, in welchen der Elektrolyt, in der Regel Schwefelsäure, in Form eines auf Basis von Siliciumdioxid gebildeten Gels festgelegt wird. Aus dem Stand der Technik, wie mit dem US-Patent US 4,317,872 offenbart, ist es bisher bekannt, das Elektrolytgel satzweise auf der Basis einer Dispersion aus einer Säure und einem Gelbildner herzustellen und in die Akkumulatorzellen einzubringen. Die satzweise Herstellung des Elektrolytgels führt jedoch oftmals zu Qualitätsschwankungen des Gels und somit letztendlich auch zu Qualitätsschwankungen in den produzierten Akkumulatoren. Auch Dokument DE0491150 und EP1317006 offenbaren Verfahren und Vorrichtungen zur Herstellung von Blei Akkumulatoren mit Gel Elektrolyten. US4359075 offenbart eine Vorrichtung und ein Verfahren zum Befüllen mehrerer Batterien mit Elektrolyt.

Darüber hinaus muß das Gemisch Säure/Dispersion zur Verzögerung der Reaktion gekühlt werden. Die Platten müssen formiert sein. Aus dem deutschen Patent DE 197 57 481 ist bekannt eine Dispersion aus Wasser, Gelbildner und vorzugsweise Borsäure zur Reaktionsverzögerung vorzumischen und diese Dispersion einzufüllen. Im Akkumulator befindet sich die Schwefelsäure in der aktiven Masse der entladenen Platten. Die Gelbildung erfolgt durch Ladung.

Mit der offengelegten US-amerikanischen Patentanmeldung US2003/0157400 A1 wird eine Vorrichtung zur Befüllung von Bleiakkumulatoren offenbart, in welcher die Gelkomponenten kontinuierlich während der Befüllung der Batterie gemischt werden. Hierdurch werden die Qualitätsschwankungen der satzweisen Elektrolytgelproduktion überwunden.

Ein weiteres Problem bei der Herstellung von Akkumulatoren mit festgelegten Elektrolyten ist die Riss- und Porenbildung während des Formierungsprozesses der aktiven Massen in den Akkumulatorzellen, d.h. während des ersten Ladens der Akkumulatoren. Die an den Elektroden ablaufenden Reaktionen (im Fall des Bleiakkumulators an der negativen Elektrode die Umwandlung von Pb in PbS04, an der positiven Elektrode die Umwandlung von Pb02 in PbS04 bzw. die entsprechenden Rückreaktionen) können zu Rissen und Poren in den gelierten Elektrolyten führen. Hierdurch wird zwar ein verbesserter Gastransport (Sauerstofftransport) innerhalb der Akkumulatorzellen ermöglicht, jedoch führen die Risse in unmittelbarer Umgebung der aktiven Massen zu erhöhten Zellwiderständen aufgrund schlechterer Kontaktierung zwischen aktiver Masse und Gel und damit zu einer Beeinträchtigung der Akkumulatorleistung.

Die Aufgabe der vorliegenden Erfindung ist es unter Berücksichtigung des Standes der Technik ein Verfahren zur Verfügung zu stellen, welches sowohl die Problematik der schwankenden Elektrolytqualität bei der satzweisen Herstellung von Gelelektrolyten, als auch die durch die Formierung der aktiven Massen in Gel-Akkumulatoren auftretenden Nachteile zu überwinden.

Gelöst wird diese Aufgabe durch eine Vorrichtung zur Durchführung eines Verfahrens zur Herstellung eines Akkumulators mit einem festgelegten Elektrolyten gemäß Anspruch 1.

Es wird ebenfalls offenbart ein Verfahren zur Herstellung eines Akkumulators mit einem festgelegten Elektrolyten, welches dadurch gekennzeichnet ist, dass der Elektrolyt in fließfähiger Form in die Akkumulatorzelle eingebracht wird und die Festlegung des Elektrolyten und die Formierung der aktiven Masse zeitgleich in der Akkumulatorzelle erfolgen und durch eine Vorrichtung zur Durchführung des Verfahrens, welche einen Füllkopf (1), einen Säurevorratsbehälter (3), einen Gelbildnervorratsbehälter (4), eine Dosierpumpe für die Säure (6.1 + 6.2), eine Dosierpumpe für den Gelbildner (5.1 + 5.2) sowie Durchflussmengenmesser für den Gelbildner (9.1 + 9.2) und die Säure (10.1 + 10.2) aufweist.

Erfindungsgemäß wird der Elektrolyt in der Akkumulatorzelle in Form eines Gels festgelegt. Der Elektrolyt kann in Form eines Sol-Gemisches in die Akkumulatorzelle eingebracht werden. Das Gel wird aus einem Gelbildner und einer Säure in die Akkumulatorzelle eingebracht.

Das Gel kann mindestens aus einem Sol und einer Säure gebildet werden. Vorzugsweise werden zumindest der Gelbildner und die Säure erst im Moment des Einbringens in die Akkumulatorzelle gemischt.

Der Gelbildner und die Säure, beispielsweise eine koloidale wässrige Siliciumdioxidlösung und Schwefelsäure, werden erst im Moment des Einbringens in die Akkumulatorzelle gemischt. Zeitgleich mit der Einbringung des Sols in die Akkumulatorzelle wird eine Spannung an die Akkumulatorzelle angelegt, die geeignet ist, aktive Massen in den Zellen zu formieren.

Die Vorteile des erfindungsgemäßen Verfahrens ergeben sich daraus, daß einerseits umformierte Platten eingesetzt werden können, andererseits das Sol/Säure-Gemisch kurz vor dem Einfüllen erstellt und innerhalb der Reaktionszeit eingefüllt wird. Daraus ergeben sich erhebliche Verfahrensvereinfachungen und Einsparungen wie Verzicht auf Kühlung, Bewegung, Vorformierung. Das Verfahren kann bei Raumtemperatur durchgeführt werden.

Insbesondere kann der Akkumulator ein Blei-Gel-Akkumulator mit einem Siliciumdioxid / Schwefelsäure-Elektrolyten sein. Das Siliciumdioxid kann in Form einer kolloidalen wässrigen Lösung eingesetzt werden.

Durch die erfindungsgemäße Vorgehensweise wird bei der Formierung die Beweglichkeit der Schwefelsäure verringert, woraus eine Vergleichmäßigung der Wärmeentwicklung folgt, so dass Temperaturspritzen sich nicht, wie im Stand der Technik bekannt, negativ auf andere Bestandteile auswirken können. Weitere Vorteile und Merkmale der Erfindung ergeben sich aus der nachfolgenden Figurenbeschreibung und dem Ausführungsbeispiel:

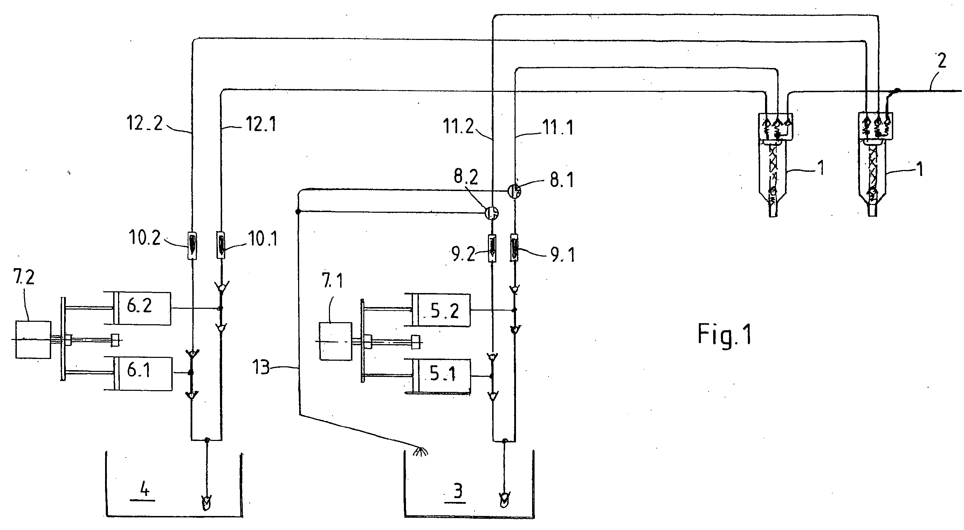

- Fig. 1: zeigt einen schematischen Aufbau der erfindungsgemäßen Vorrichtung,
- Fig. 2: zeigt den Aufbau des erfindungsgemäßen Füllkopfes (1) und
- Fig. 3: zeigt eine erfindungsgemäße Vorrichtung zur Befüllung einer Mehrzahl von Akkumulatoren.

Die erfindungsgemäße Vorrichtung zur Durchführung dieses Verfahrens weist neben entsprechenden elektrischen Anschlüssen und geeigneten Spannungsquellen für die Anlegung der notwendigen Formierungsspannung einen Füllkopf (1) auf, welcher zumindest je einen Zulauf (19) für den Gelbildner, die Säure und ein Spülmedium aufweist. Darüber hinaus weist der Füllkopf (1) eine Mischeinrichtung (20) zur statischen Mischung zumindest des Gelbildners mit der Säure auf. Des weiteren verfügt der Füllkopf über einen Füllfinger (21), der vorteilhafterweise an die zu befüllende Akkumulatorzelle angepasst ist und zur Flexibilität des Füllkopfes an diesem austauschbar angebracht ist. Darüber hinaus weist die Vorrichtung Durchflussmengenmesser für den Gelbildner und die eingesetzte Säure auf, mit deren Hilfe exakte, mittels einer Steuereinrichtung vorgebbare Mischungsverhältnisse erzeugt werden können.

Des weiteren verfügt die Vorrichtung am Füllkopf über eine Zuleitung für ein Spülmedium (2), mit dessen Hilfe über 3-Wege-Hähne (8.1 + 8.2) die in den Gelbildner führenden Leitungen (11.1+ 11.2) befindlichen Restmengen Gelbildner über eine Rückspülleitung (13) in den Vorratsbehälter für den Gelbildner (3) zurückgespült werden können. Vorteilhafterweise dient als Spülmedium Pressluft.

Die erfindungsgemäße Vorrichtung verfügt über Dosierpumpen für den Gelbildner (5.1 + 5.2) und die Säure (6.1 + 6.2). Vorteilhafterweise werden diese Dosierpumpen mittels Schrittmotoren (7.1 + 7.2) betrieben. Es ist jedoch auch jede andere Antriebsvorrichtung geeignet, durch welche sich eine feine und genaue Dosierung der zu mischenden Komponenten gewährleisten läßt.

Durch das kontinuierliche Mischen der Gelkomponenten im Füllkopf zum Zeitpunkt der Einfüllung des Gels in Form eines Sols in den Akkumulator und die mittels der Dosierpumpen fein einzustellenden Mischungsverhältnisse werden die aus der satzweisen Mischung des Elektrolytgels bekannten Qualitätsschwankungen überwunden. Durch die gleichzeitige Befüllung des Akkumulators mit dem Elektrolytgel bzw. Sol und Formierung der aktiven Massen in den Zellen werden die aus dem Stand der Technik bekannten Nachteile der Gelakkumulatoren überwunden.

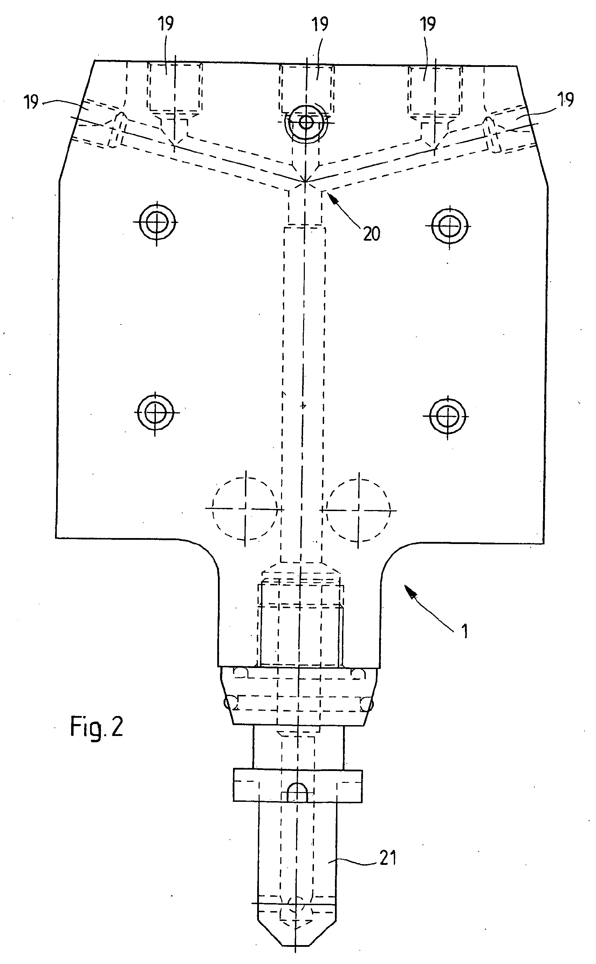

Vorteilhafterweise weist eine Vorrichtung zur Durchführung des erfindungsgemäßen Verfahrens einen wie beispielsweise in Fig. 2 dargestellten Füllkopf (1) auf. Der Füllkopf verfügt über zumindest jeweils einen Zulauf (19) für die Gelkomponenten und das Spülmedium. Darüber hinaus weist ein erfindungsgemäßer Füllkopf eine statische Mischvorrichtung (20) auf, in welcher die Gelkomponenten vor Einfüllung in den Akkumulator vermischt werden.

Zur Einfüllung des Elektrolytsols in den Akkumulator verfügt der erfindungsgemäße Füllkopf (1) über einen Füllfinger (21), welcher vorteilhafterweise an den zu befüllenden Akkumulator bzw. die Geometrie der Einfüllöffnung des Akkumulators angepasst ist. Vorteilhafterweise ist der Füllfinger (21) auswechselbar an den Füllkopf (1) angebracht, so dass ein Füllkopf (1) mittels unterschiedlicher Füllfinger (21) für unterschiedliche Akkumulatortypen eingesetzt werden kann.

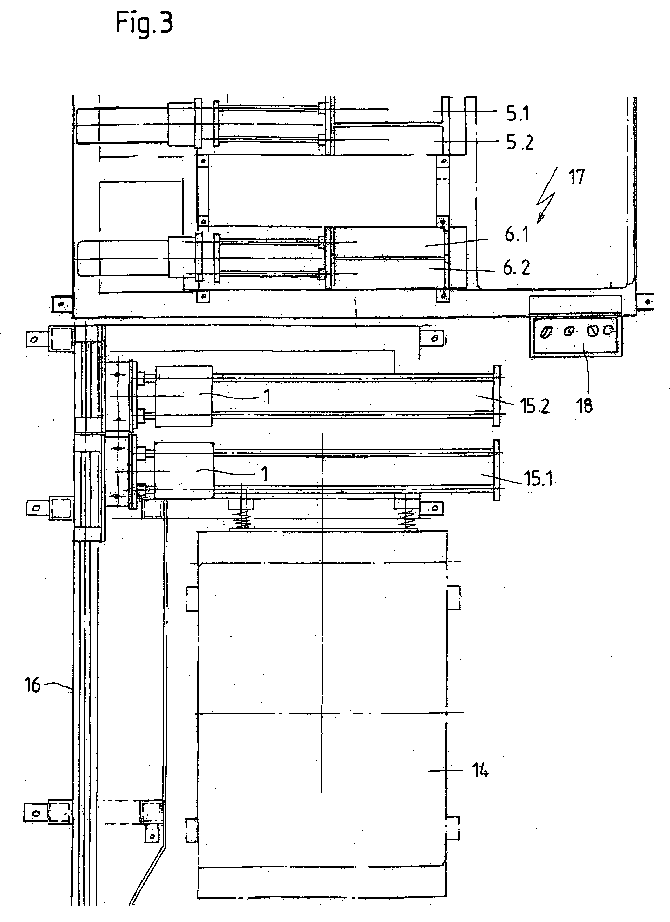

Fig. 3 zeigt eine erfindungsgemäße Vorrichtung zur Befüllung einer Mehrzahl von Akkumulatoren. Die erfindungsgemäße Vorrichtung weist eine Aufnahme (14) für die zu befüllenden Akkumulatoren, Positionierungsgeräte (15.1 + 15.2) für die erfindungsgemäßen Füllköpfe (1) sowie eine Dosiereinheit mit Dosierpumpen (5.1 + 5.2) für den Gelbildner und Dosierpumpen (6.1 + 6.2) für die Säure auf.

Die Positionierungsgeräte (15.1 + 15.2) für die Füllköpfe (1) sind an einer Führung (16) verfahrbar angebracht, so dass die Füllköpfe frei verfahrbar über der Aufnahme (14) für die zu befüllenden Akkumulatoren sind. Alternativ kann die Aufnahme (14) für die zu befüllenden Akkumulatoren in Form eines XY verfahrbaren Tisches ausgebildet sein, während die Füllköpfe (1) ortsfest angebracht sind. Eine weitere Alternative zur Positionierung der Füllköpfe (1) ist die Verwendung eines Sechs-Achsen-Knickarmrobotors oder anderer Handhabungsgeräte.

Zur Steuerung verfügt die erfindungsgemäße Vorrichtung über einen Steuerschrank (17) und ein Bedienpult (18).

### Bezugszeichenliste

- 1: Füllkopf
- 2: Leitung für Spülmedium
- 3: Vorratsbehälter Gelbildner
- 4: Vorratsbehälter Säure
- 5.1/5.2: Dosierpumpen Gelbildner
- 6.1/6.2: Dosierpumpen Säure
- 7.1/7.2: Schrittmotoren
- 8.1/8.2: 3-Wege-Hahn
- 9.1/9.2: Durchflussmesser Gelbildner
- 10.1/10.2: Durchflussmesser Säure
- 11.1/11.2: Leitung für Gelbildner
- 12.1/12.2: Leitung für Säure
- 13: Rückspülleitung Gelbildner
- 14: Aufnahme für zu befüllende Akkumulatoren
- 15.1/15.2: Positioniergerät mit Füllkopf
- 16: Laufschiene für Positioniergerät
- 17: Steuerschrank
- 18: Bedienpult
- 19: Zuläufe
- 20: Mischeinrichtung
- 21: Füllfinger

## Patentansprüche

1. Vorrichtung zur Durchführung eines Verfahrens zur Herstellung eines Akkumulators mit einem festgelegten Elektrolyten, wobei ein Elektrolyt in fließfähiger Form in eine Akkumulatorzelle eingebracht wird und die Festlegung des Elektrolyten und die Formation der aktiven Masse zeitgleich in der Akkumulatorzelle erfolgen, aufweisend einen Füllkopf (1), einen Säurevorratsbehälter (3), einen Gelbildnervorratsbehälter (4), eine Dosierpumpe für die Säure (6.1 + 6.2), eine Dosierpumpe für den Gelbildner (5.1 + 5.2) sowie Durchflussmengenmesser für den Gelbildner (9.1 + 9.2) und die Säure (10.1 + 10.2), wobei die Vorrichtung eine Leitung für Gelbildner (11.1 + 11.2), eine Leitung für Säure (12.1 + 12.2) und eine Zuleitung (2) für ein Spülmedium aufweist.

2. Vorrichtung zur Durchführung eines Verfahrens zur Herstellung eines Akkumulators mit einem festgelegten Elektrolyten gemäß Anspruch 1, aufweisend eine Aufnahme für zu befüllende Akkumulatorzellen (14) und eine Einrichtung (16) zur Positionierung des Füllkopfes (1) und der zu befüllenden Akkumulatorzellen relativ zueinander.

3. Vorrichtung gemäß Anspruch 2, **dadurch gekennzeichnet, dass** die Positioniereinrichtung (16) durch zwei orthogonale zueinander angeordnete Führungselemente ausgebildet ist, mittels derer der Füllkopf (1) frei verfahrbar ist.

4. Füllkopf für eine Vorrichtung nach einem der Ansprüche 1 bis 3, aufweisend mindestens je einen Zulauf (19) für Gelbildner, Säure und Spülmedium, eine Mischeinrichtung (20) zur statischen Mischung zumindest des Gelbildners mit der Säure, sowie einen Füllfinger (21) zum Einbringen des gemischten, aus Gelbildner und Säure bestehenden Sols in den Akkumulator.

5. Füllkopf nach Anspruch 4, **gekennzeichnet dadurch, dass** der Füllkopf (1) mit unterschiedlichen an die zu befüllenden Akkumulatorzellen angepasste Füllfinger (21) ausrüstbar ist.

## Claims

1. Device for carrying out a method for manufacturing a battery with an immobilized electrolyte, wherein an electrolyte in a flowable form is introduced into a battery cell, and the fixing of the electrolyte and the formation of the active mass take place simultaneously inside the battery cell, the device comprising a filler head (1), an acid reservoir (3), a gelling agent reservoir (4), a dosing pump for the acid (6.1 + 6.2), a dosing pump for the gelling agent (5.1 + 5.2) as well as flow meter for the gelling agent (9.1 + 9.2) and the acid (10.1 + 10.2), wherein the device includes a pipe for the gelling agent (11.1 + 11.2), a pipe for the acid (12.1 + 12.2), and a supply pipe (2) for a flushing medium.

2. Device for carrying out a method for manufacturing a battery with an immobilized electrolyte according to claim 1, comprising a receiver (14) for the battery cells to be filled, and an installation (16) for positioning the filler head (1) and the battery cells to be filled relative to each other.

3. Device according to claim 2, **characterized in that** the positioning installation (16) is formed by two mutually orthogonal guide elements by means of which the filler head (1) can be freely displaced.

4. Filler head for a device according to any one of the claims 1 to 3, comprising a supply (19) for each of the gelling agent, acid, and flushing medium, a mixing installation (20) for the static mixing of at least the gelling agent with the acid, as well as a filling finger (21) for introducing the mixed sol consisting of the gelling agent and the acid into the battery.

5. Filler head according to claim 4, **characterized in that** the filler head (1) can be equipped with different filling fingers (21) adapted to the battery cells to be filled.

## Revendications

1. Dispositif pour la mise en oeuvre d'un procédé pour l'élaboration d'une batterie contenant un électrolyte immobilisé, dans lequel procédé un électrolyte sous forme coulante est introduit dans un élément de batterie et puis se déroulent la fixation de l'électrolyte et en même temps la formation de la masse active dans l'élément de batterie, comprenant une tête de remplissage (1), un réservoir d'acide (3), un réservoir d'agent gélifiant (4), une pompe de dosage pour l'acide (6.1 + 6.2), une pompe de dosage pour l'agent gélifiant (5.1 + 5.2) ainsi qu'un débitmètre pour l'agent gélifiant (9.1 + 9.2) et pour l'acide (10.1 + 10.2), le dispositif comprenant une conduite pour l'agent gélifiant (11.1 + 11.2), une conduite pour l'acide (12.1 + 12.2) et une conduite (2) pour l'alimentation d'un fluide de rinçage.

2. Dispositif pour la mise en oeuvre d'un procédé pour l'élaboration d'une batterie contenant un électrolyte immobilisé selon la revendication 1, comprenant un dispositif de réception d'éléments de batterie (14) à remplir et une installation (16) pour le positionnement de la tête de remplissage (1) et des éléments de batterie à remplir l'une par rapport aux autres.

3. Dispositif selon la revendication 2, **caractérisé en ce que** ladite installation de positionnement (16) est formée de deux éléments de guidage orthogonaux l'un par rapport à l'autre, au moyen desquels la tête de remplissage (1) peut être librement déplacée.

4. Tête de remplissage pour un dispositif selon l'une quelconque des revendications 1 à 3, comprenant au moins un dispositif d'alimentation (19) respectif pour l'agent gélifiant, l'acide et le fluide de rinçage, une installation de mixage (20) pour mixer de manière statique au moins l'agent gélifiant avec l'acide, ainsi qu'un doigt de remplissage (21) pour introduire dans la batterie le sol mixé consistant en l'agent gélifiant et l'acide.

5. Tête de remplissage selon la revendication 4, **caractérisée en ce que** la tête de remplissage (1) peut être équipée de doigts de remplissage (21) différents et adaptés aux éléments de batterie à remplir.
